# EUROPEAN PATENT APPLICATION

(11) **EP 4 383 425 A1**
(43) Date of publication of application: **12.06.2024**
(21) Application number: 21960255.4
(22) Date of filing: 14.10.2021
(51) Int. Cl.: H01M 50/244, F16J 15/10

(54) **ACCOMMODATION DEVICE, BATTERY, ELECTRIC DEVICE, AND DEVICE AND METHOD FOR MANUFACTURING BATTERY**

(71) Applicant: Contemporary Amperex Technology Co., Limited, Fujian PRC 352100 (CN)
(72) Inventor: HUANG, Haihua, Ningde, Fujian 352000 (CN); LUO, Wenchao, Ningde, Fujian 352000 (CN)
(74) Representative: Gong, Jinping
(86) International application number: PCT/CN2021/123918
(87) International publication number: WO 2023/060519

(57) **Abstract**

This application provides an accommodating apparatus, a battery, an electric device, and a manufacturing device and method of battery, and relates to the field of battery technologies. The accommodating apparatus includes a first box, a second box, and a sealing assembly, where the first box has an open end; the second box is configured to cover the open end; and the sealing assembly includes a first sealing piece and a second sealing piece that are separate from each other. The first sealing piece and the second sealing piece are configured to abut against the open end and the second box respectively, so as to implement a hermetic connection between the first box and the second box. The first sealing piece and the second sealing piece are separate from each other, so that the first sealing piece and the second sealing piece can be installed separately without interference. This makes the installation of the first sealing piece and the second sealing piece more flexible, allowing them to be installed between the first box and the second box in a proper manner, so as to properly utilize the space between the first box and the second box. This is conducive to reducing outline dimensions of the accommodating apparatus, thereby increasing volumetric energy density of the battery using such accommodating apparatus.

## Description

### TECHNICAL FIELD

This application relates to the field of battery technologies, and specifically, to an accommodating apparatus, a battery, an electric device, and a manufacturing device and method of battery.

### BACKGROUND

Currently, batteries commonly used in vehicles are lithium-ion batteries. Lithium-ion batteries as rechargeable batteries have advantages of small size, high energy density, high power density, long cycle life, and long storage time.

A battery typically includes a box and a battery cell. The battery cell is accommodated in the box. The box includes a box body and a cover. The box body and the cover are hermetically connected using a sealing structure to form a sealed space to accommodate the battery cell. The sealing structure has an important influence on the safety performance and volumetric energy density of the battery. Therefore, how the influence of the sealing structure on the volumetric energy density of the battery is reduced has become an urgent problem to be solved in the field of battery technologies.

### SUMMARY

Embodiments of this application provide an accommodating apparatus, a battery, an electric device, and a manufacturing device and method of battery to improve the volumetric energy density of batteries.

According to a first aspect, an embodiment of this application provides an accommodating apparatus including a first box, a second box, and a sealing assembly, where the first box has an open end; the second box is configured to cover the open end; and the sealing assembly includes a first sealing piece and a second sealing piece that are separate from each other. The first sealing piece and the second sealing piece are configured to abut against the open end and the second box respectively, so as to implement a hermetic connection between the first box and the second box.

In the foregoing technical solution, the first box and the second box jointly define an accommodating space. The first box and the second box are sealed using the first sealing piece and the second sealing piece that are separate from each other, so as to implement hermetic connection between the first box and the second box. In this way, a hermetic accommodating space is formed between the first box and the second box, thereby reducing the risk of leakage in the accommodating apparatus. In addition, the first sealing piece and the second sealing piece are separate from each other, so that the first sealing piece and the second sealing piece can be installed separately without interference. This makes the installation of the first sealing piece and the second sealing piece more flexible, allowing them to be installed between the first box and the second box in a proper manner, so as to properly utilize the space between the first box and the second box. This is conducive to reducing outline dimensions of the accommodating apparatus, thereby increasing volumetric energy density of the battery using such accommodating apparatus.

In some embodiments of the first aspect of this application, the sealing assembly further includes a bracket, and the bracket is disposed between the open end and the second box. The first sealing piece is configured as a seal between the open end and the bracket, and the second sealing piece is configured as a seal between the bracket and the second box.

In the foregoing technical solution, the bracket is disposed between the first box and the second box, the first sealing piece serves as a seal between the bracket and the open end of the first box, and the second sealing piece serves as a seal between the bracket and the second box, facilitating installation and fastening of the first sealing piece and the second sealing piece. In addition, provision of the bracket allows the first sealing piece to be installed based on a relative position relationship between the bracket and the first box, and the second sealing piece to be installed based on a relative position relationship between the bracket and the second box. This makes the installation of the first sealing piece and the second sealing piece more flexible, allowing them to be installed between the first box and the second box in a more proper manner. This is conducive to reducing the outline dimensions of the accommodating apparatus, thereby increasing the volumetric energy density of the battery using such accommodating apparatus.

In some embodiments of the first aspect of this application, the bracket includes a body and an extension portion, the extension portion extends from the body into the first box in a direction facing away from the second box, and the first sealing piece abuts against the extension portion.

In the foregoing technical solution, the extension portion extends into the first box and the first sealing piece abuts against the extension portion, which can be understood as that the first sealing piece is partially or entirely located inside the first box, or the first sealing piece retracts into the first box. In this way, space occupied by the first sealing piece at the open end of the first box is reduced, so that outline dimensions of the whole accommodating apparatus can be reduced, thereby increasing the volumetric energy density of the battery using such accommodating apparatus.

In some embodiments of the first aspect of this application, the first sealing piece includes a first sealing portion and a second sealing portion, the first sealing portion is configured as a seal between the open end and the body, and the second sealing portion is configured as a seal between an inner side of the first box and the extension portion.

In the foregoing technical solution, part of the first sealing piece serves as a seal between the open end of the first box and the body of the bracket, and another part of the first sealing piece serves as a seal between the inner side of the first box and the extension portion of the bracket. This is equivalent that the first sealing piece retracts into the first box. In this way, space occupied by the first sealing piece at the open end of the first box is reduced, so that the outline dimensions of the whole accommodating apparatus can be reduced, thereby increasing the volumetric energy density of the battery using such accommodating apparatus. In addition, sealing is implemented at both the open end of the first box and the inner side of the first box, which can also improve the sealing performance of the accommodating apparatus.

In some embodiments of the first aspect of this application, the first sealing portion is integrally formed with the second sealing portion.

In the foregoing technical solution, the first sealing portion is integrally formed with the second sealing portion, facilitating manufacturing of the first sealing piece. There is no connection or gap between the first sealing portion and the second sealing portion, so that sealing performance of the first sealing portion is better.

In some embodiments of the first aspect of this application, the first sealing portion and the second sealing portion are provided separately.

In the foregoing technical solution, arrangement of the separate first sealing portion and second sealing portion allows for more diverse assembly methods, facilitating selection of a suitable assembly method according to actual needs. This makes the installation of the first sealing portion and the second sealing portion more flexible between the bracket 233 and the first box 21, allowing them to be installed between the bracket and the first box in a proper manner. This is conducive to reducing the outline dimensions of the accommodating apparatus, thereby increasing the volumetric energy density of the battery using such accommodating apparatus.

In some embodiments of the first aspect of this application, the second sealing portion fits around the extension portion.

In the foregoing technical solution, the second sealing portion fits around the extension portion. In a process of assembling the accommodating apparatus, after the second sealing portion and the bracket are assembled into one part, the part is installed at the open end of the first box, and then the open end of the first box is covered with the second box, making the assembly easier and faster.

In some embodiments of the first aspect of this application, in a direction of the first box facing away from the second box, an end of the second sealing portion facing away from the second box does not exceed an end of the extension portion facing away from the second box.

In the foregoing technical solution, the end of the second sealing portion facing away from the second box does not exceed the end of the extension portion facing away from the second box, which can reduce the risk of interference between the second sealing portion and other components in the accommodating apparatus while guaranteeing the sealing performance of the first sealing piece.

In some embodiments of the first aspect of this application, in the direction of the first box facing away from the second box, the end of the second sealing portion facing away from the second box is flush with the end of the extension portion facing away from the second box.

In the foregoing technical solution, the end of the second sealing portion facing away from the second box is flush with the end of the extension portion facing away from the second box, which ensures a large sealing coverage and good sealing performance of the first sealing piece, and also reduces the risk of interference between the second sealing portion and other components in the accommodating apparatus.

In some embodiments of the first aspect of this application, the open end is provided with a first accommodating portion for accommodating the first sealing portion, the first accommodating portion has a bottom surface that is connected to the inner side, and the first sealing portion is configured as a seal between the bottom surface and the body.

In the foregoing technical solution, the first sealing portion may be partially or fully accommodated in the first accommodating portion. Therefore, provision of the first accommodating portion can not only reduce the size of the accommodating apparatus in a height direction, but also define the maximum compression amount of the first sealing portion, achieving good sealing performance between the first box and the second box.

In some embodiments of the first aspect of this application, a side of the bracket facing the second box is provided with a second accommodating portion for accommodating the second sealing piece.

In the foregoing technical solution, the second sealing piece may be partially or fully accommodated in the second accommodating portion. Therefore, provision of the second accommodating portion can not only reduce the size of the accommodating apparatus in the height direction, but also define the maximum compression amount of the second sealing portion, achieving good sealing performance between the first box and the second box.

In some embodiments of the first aspect of this application, the accommodating apparatus further includes a fastening piece, and the fastening piece is configured to lock the first box, the second box, and the bracket.

In the foregoing technical solution, the first box, the second box, and the bracket are locked using the fastening piece, so that there is a stable relative position relationship between the first box, the second box, and the bracket. In this way, the first sealing piece stably serves as a seal between the first box and the bracket, and the second sealing piece stably serves as a seal between the second box and the bracket, thereby ensuring the sealing performance of the accommodating apparatus.

In some embodiments of the first aspect of this application, the fastening piece is disposed outward from an outer periphery of the first sealing piece.

In the foregoing technical solution, the fastening piece is disposed on the outer peripheral side of the first sealing piece, which avoids the position of the first sealing piece and enhances the sealing performance.

In some embodiments of the first aspect of this application, sealing width of the first sealing portion is smaller than or equal to sealing width of the second sealing portion.

In the foregoing technical solution, when it is necessary to meet the sealing rating requirement of the accommodating apparatus, a sealing interface between the first sealing piece and the first box needs to meet a requirement for minimum sealing width. When the sealing width of the first sealing portion is smaller than or equal to the sealing width of the second sealing portion, an excess space at the edge or corner in the accommodating apparatus can be used as a sealing interface of the second sealing portion, which can balance the sealing performance to a maximum extent and reduce a flange width at the edges of the first box and the second box to reduce the overall size of the accommodating apparatus, thereby improving the energy density.

According to a second aspect, an embodiment of this application provides a battery including a battery cell and the accommodating apparatus provided in the embodiments of the first aspect. The battery cell is accommodated in the accommodating apparatus.

In the foregoing technical solution, the battery cell is accommodated in the accommodating apparatus. The first box and the second box of the accommodating apparatus jointly define an accommodating space to accommodate the battery cell, and the first box and the second box are sealed using the first sealing piece and the second sealing piece that are separate from each other, so as to implement the hermetic connection between the first box and the second box. In this way, a hermetic accommodating space is formed between the first box and the second box, thereby reducing the risk of leakage in the accommodating apparatus. In addition, the first sealing piece and the second sealing piece are separate from each other, so that the first sealing piece and the second sealing piece can be installed separately without interference. This makes the installation of the first sealing piece and the second sealing piece more flexible, allowing them to be installed between the first box and the second box in a proper manner, so as to properly utilize the space between the first box and the second box. This is conducive to reducing outline dimensions of the accommodating apparatus, thereby increasing volumetric energy density of the battery.

According to a third aspect, an embodiment of this application provides an electric device, including the battery provided in the embodiments of the second aspect.

In the foregoing technical solution, the outline dimensions of the accommodating apparatus of the battery in the embodiments of the second aspect are small, and the battery has a high volumetric energy density.

According to a fourth aspect, an embodiment of this application provides a manufacturing device of battery including a providing apparatus and an assembly apparatus. The providing apparatus is configured to provide an accommodating apparatus and at least one battery cell. The accommodating apparatus includes a first box, a second box, and a sealing assembly. The first box has an open end, and the sealing assembly includes a first sealing piece and a second sealing piece. The assembly apparatus is configured to accommodate the battery cell in the first box, cover the open end with the second box, and place the sealing assembly between the first box and the second box for sealing, so that the first sealing piece serves as a seal between the open end and the second box and the second sealing piece serves as a seal between the first sealing piece and the second box.

According to a fifth aspect, an embodiment of this application provides a manufacturing method of battery, including:
providing an accommodating apparatus, where the accommodating apparatus includes:
a first box having an open end;
a second box; and
a sealing assembly, including a first sealing piece and a second sealing piece;
providing at least one battery cell;
accommodating the battery cell in the first box;
covering the open end with the second box; and
placing the sealing assembly as a seal between the first box and the second box, so that the first sealing piece serves as a seal between the open end and the second box and the second sealing box serves as a seal between the first sealing piece and the second box.

In some embodiments of the fifth aspect, the first sealing piece implements sealing by glue coating and/or the second sealing piece implements sealing as a formed gasket.

In the foregoing technical solution, the first sealing piece implements sealing by glue coating so that the first sealing piece not only has a sealing function but also has an adhesive capability, facilitating a stable sealing between the first box and the second box; and the second sealing piece implements sealing using the formed gasket, which is easy to operate.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a schematic structural diagram of a battery according to some embodiments of this application;
FIG. 3 is an exploded view of a battery cell according to some embodiments of this application;
FIG. 4 is a schematic structural exploded view of a battery cell according to some embodiments of this application;
FIG. 5 is an exploded view of a sealing assembly according to some embodiments of this application;
FIG. 6 is a cross-sectional view of a battery according to some other embodiments of this application;
FIG. 7 is a diagram of FIG. 6 enlarged at I;
FIG. 8 is a schematic structural diagram of a manufacturing device of battery according to some embodiments of this application; and
FIG. 9 is a flowchart of a manufacturing method of battery according to some embodiments of this application.

Reference signs: 1000. vehicle; 100. battery; 10. battery cell; 11. housing; 111. opening; 12. electrode assembly; 13. end cover assembly; 131. end cover; 132. electrode terminal; 133. shoulder region; 20. accommodating apparatus; 21. first box; 211. open end; 212. accommodating cavity; 213. inner side of first box; 214. first accommodating portion; 2141. bottom surface; 2142. arc transition surface; 215. first box body; 216. first connecting portion; 22. second box; 221. second box body; 222. second connecting portion; 23. sealing assembly; 231. first sealing piece; 2311. first sealing portion; 2312. second sealing portion; 232. second sealing piece; 233. bracket; 2331. body; 23311. bypass hole; 23312. inner side of body; 2332. extension portion; 2333. second accommodating portion; 2334. third locking hole; 24. fastening piece; 200. controller; 300. motor; 2000. manufacturing device of battery; 2100. providing apparatus; and 2200. assembly apparatus.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. Generally, the components of the embodiments of this application as described and illustrated in the accompanying drawings herein can be arranged and designed in a variety of configurations.

Therefore, the following detailed description of the embodiments of this application as provided in the accompanying drawings is not intended to limit the scope of this application but merely to represent selected embodiments of this application. All other embodiments obtained by a person of ordinary skill in the art based on the embodiments of this application without creative efforts shall fall within the protection scope of this application.

It should be noted that, without conflict, the embodiments and features in the embodiments in this application may be combined with each other.

It should be noted that similar reference signs and letters indicate similar items in the following drawings, and therefore once an item is defined in one drawing, it does not need to be further defined or explained in the subsequent drawings.

In the description of the embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

Currently, from a perspective of market development, application of electric vehicle batteries is becoming more and more extensive. Electric vehicle batteries are widely used not only in energy storage power supply systems such as hydro, thermal, wind, and solar power plants, but also in electric transportation tools such as electric bicycles, electric motorcycles, and electric vehicles, and fields such as military equipment and aerospace. With continuous expansion of application fields of electric vehicle batteries, market demands for the electric vehicle batteries are also increasing.

The battery includes an accommodating apparatus and a battery cell accommodated in the accommodating apparatus. The accommodating apparatus includes a first box and a second box that cover each other. The first box and the second box are hermetically connected to each other using a sealing piece so that the first box and the second box form a hermetic accommodating space to prevent leakage in the accommodating apparatus and to provide effective protection to electrical components accommodated in the accommodating apparatus. The inventors have found that an existing sealing piece is an integral structure, and is usually pressed between an end face of the first box facing the second box and an end face of the second box facing the first box. Because the sealing piece is an integral structure, it is required that both the end face of the first box facing the second box and the end face of the second box facing the first box have installation dimensions that match dimensions of the sealing piece, which makes outline dimensions of the accommodating apparatus relatively large, thereby reducing volumetric energy density of the battery.

Based on the above considerations, to improve the volumetric energy density of the battery, the inventors, after in-depth research, have designed an accommodating apparatus. A hermetic connection is implemented between the first box and the second box by using a first sealing piece and a second sealing piece that are separate from each other, so that the first sealing piece and the second sealing piece can be installed separately without interference. This makes the installation of the first sealing piece and the second sealing piece more flexible, allowing them to be installed between the first box and the second box in a proper manner, so as to properly utilize the space between the first box and the second box. This is conducive to reducing outline dimensions of the accommodating apparatus, thereby increasing volumetric energy density of the battery using such accommodating apparatus.

The technical solution described in the embodiments of this application is applicable to batteries and electric devices using a battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

The embodiments of this application impose no special limitation on the foregoing electric device.

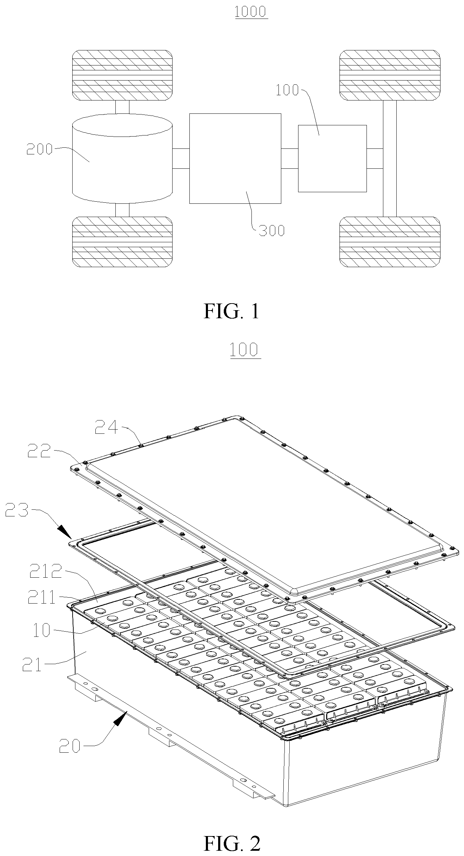

For ease of description, the electric device being a vehicle is used as example for description of the following embodiments. FIG. 1 is a schematic structural diagram of a vehicle 1000 according to some embodiments of this application. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power supply for the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural diagram of a battery 100 according to some embodiments of this application.

The battery 100 includes a battery cell 10 and an accommodating apparatus 20, and the battery cell 10 is accommodated in the accommodating apparatus 20. In the battery 100, one or a plurality of battery cells 10 may be provided. If a plurality of battery cells 10 are provided, the plurality of battery cells 10 may be connected in series, parallel, or series-parallel, where being connected in series-parallel means a combination of series and parallel connections of the plurality of battery cells 10. The plurality of battery cells 10 may be directly connected in series, parallel, or series-parallel, and a whole constituted by the plurality of battery cells 10 is accommodated in the accommodating apparatus 20. Certainly, the plurality of battery cells 10 may first be connected in series, parallel, or series-parallel to constitute a battery module, and then a plurality of battery modules are connected in series, parallel, or series-parallel to constitute a whole, and accommodated in the accommodating apparatus 20. The battery cell 10 may be cylindrical, flat, cuboid, or of other shapes. For example, FIG. 2 shows a case in which the battery cell 10 is cylindrical.

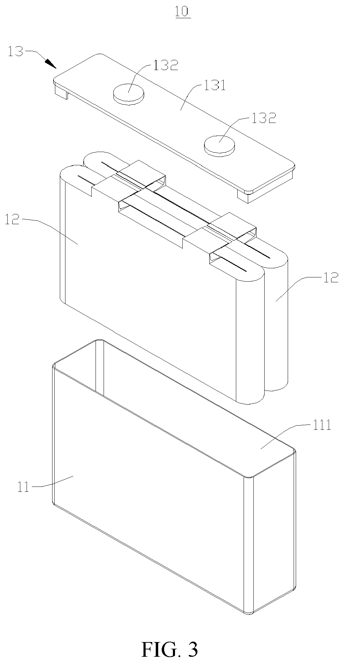

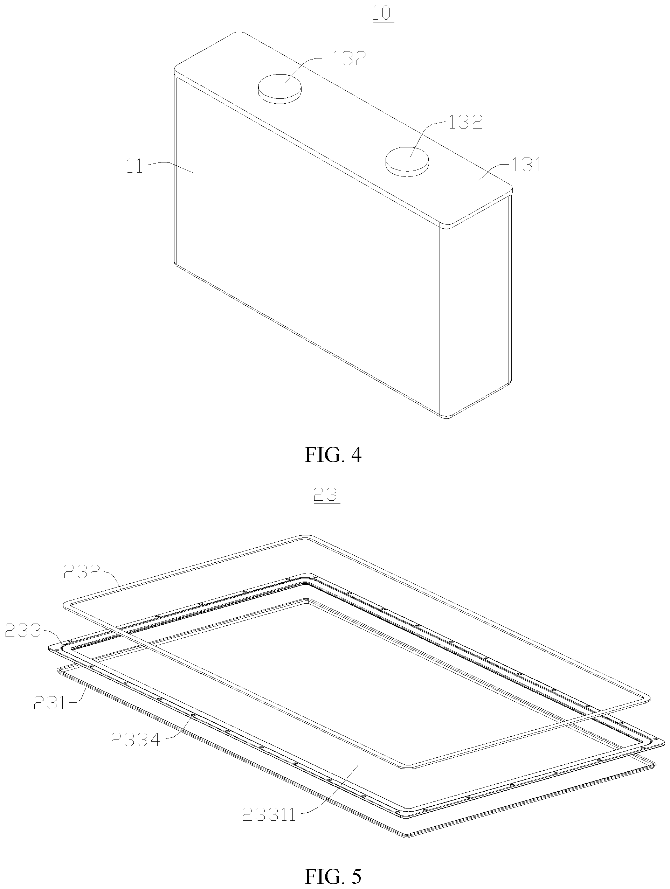

In some embodiments, the battery 100 may further include a bus component (not shown in the figure). The plurality of battery cells 10 may be electrically connected via the bus component, so that the plurality of battery cells 10 are connected in series, parallel, or series-parallel. Referring to FIG. 3 and FIG. 4, FIG. 3 is an exploded view of a battery cell 10 provided in some embodiments of this application, and FIG. 4 is a schematic structural diagram of the battery cell 10 provided in some embodiments of this application. The battery cell 10 may include a housing 11, an electrode assembly 12, and an end cover assembly 13. The housing 11 has an opening 111, the electrode assembly 12 is accommodated in the housing 11, and the end cover assembly 13 is configured to cover the opening 111.

The electrode assembly 12 may include a positive electrode plate (not shown in the figure), a negative electrode plate (not shown in the figure), and a separator (not shown in the figure). The electrode assembly 12 may be a wound structure formed by the positive electrode plate, the separator, and the negative electrode plate through winding, or a laminated structure formed by the positive electrode plate, the separator, and the negative electrode plate through lamination. The electrode assembly 12 further includes a positive tab (not shown in the figure) and a negative tab (not shown in the figure). The positive tab may be a positive electrode current collector uncoated with a positive electrode active substance layer in the positive electrode plate, and the negative tab may be a negative electrode current collector uncoated with a negative electrode active substance layer in the negative electrode plate.

The end cover assembly 13 includes an end cover 131 and an electrode terminal 132 provided on the end cover 131. The electrode terminal 132 protrudes from an outer surface of the end cover 131, and a step formed between the electrode terminal 132 and the end cover 131 as a shoulder region 133 of the battery cell 10. The housing 11 may have one or two openings 111. If the housing 11 has one opening 111, a quantity of the end cover assemblies 13 may also be one. Two electrode terminals 132 may be provided in the end cover assembly 13, the two electrode terminals 132 are configured to electrically connect to the positive tab and the negative tab of the electrode assembly 12 separately, and the two electrode terminals 132 in the end cover assembly 13 are a positive electrode terminal and a negative electrode terminal respectively. If the housing 11 has two openings 111, for example, two openings 111 are disposed on two opposite sides of the housing 11, the quantity of the end cover assembly 13 may alternatively be two, and the two end cover assemblies 13 cover the two openings 111 of the housing 11 respectively. In this case, the electrode terminal 132 in one of the end cover assembly 13 is a positive electrode terminal that is configured to electrically connect to the positive tab of the electrode assembly 12, and the electrode terminal 132 in the other end cover assembly 13 is a negative electrode terminal that is configured to electrically connect to the negative electrode plate of the electrode assembly 12. FIG. 3 and FIG. 4 show that the housing 11 of the battery cell 10 has one opening 111 and the end cover 131 is provided with two electrode terminals 132.

Referring to FIG. 2, FIG. 5, FIG. 6, and FIG. 7, FIG. 5 is an exploded view of a sealing assembly 23 provided in some embodiments of this application. In some embodiments, the accommodating apparatus 20 includes a first box 21, a second box 22, and a sealing assembly 23. The first box 21 has an open end 211. The second box 22 is configured to cover the open end 211. The sealing assembly 23 includes a first sealing piece 231 and a second sealing piece 232 that are separate from each other, and the first sealing piece 231 and the second sealing piece 232 are configured to abut against the open end 211 and the second box 22 respectively, to implement a hermetic connection between the first box 21 and the second box 22.

It should be noted that if the first box 21 has the open end 211, the first box 21 is a hollow structure with the opening 111 at one end forming an accommodating cavity 212 for accommodating the battery cell 10. The battery cell 10 is partially or fully accommodated in the accommodating cavity 212 of the first box 21, and the battery cell 10 is placed into the first box 21 through the open end 211 of the first box 21. In the embodiment in which the battery cell 10 is partially accommodated in the first box 21, the battery cell 10 protrudes from the open end 211 of the first box 21. In the embodiment in which the battery cell 10 is fully accommodated in the first box 21, the battery cell 10 is flush with or below the open end 211 of the first box 21.

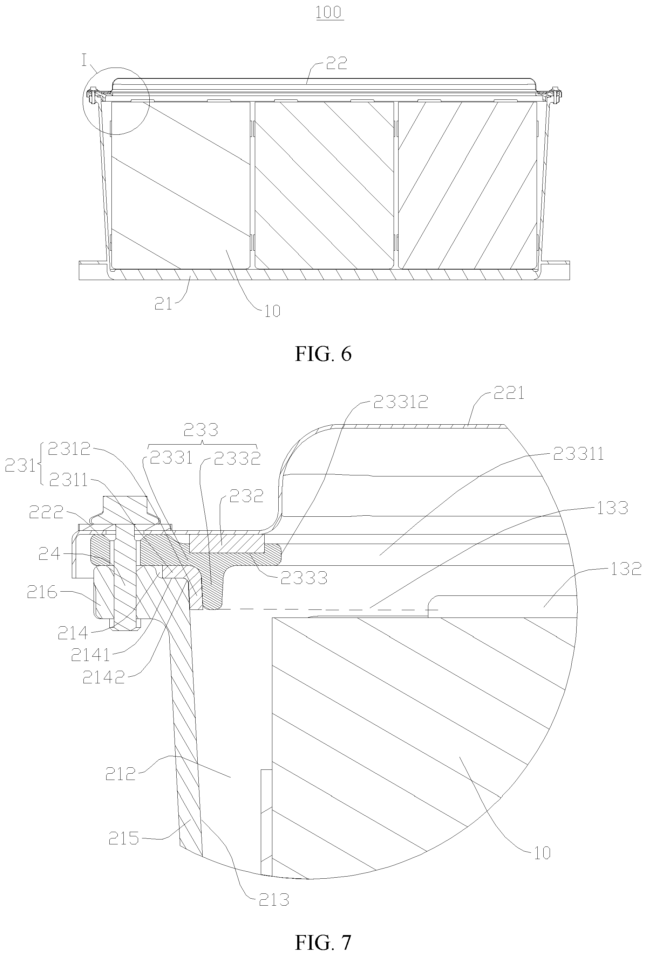

A cross-section of the first box 21 may be rectangular, square, circular, polygonal, or the like. In a height direction, cross-sectional areas of the accommodating cavity 212 formed by the first box 21 may be equal or may vary gradually. For example, in this application, referring to FIG. 6, the cross-sectional area of the accommodating cavity 212 of the first box 21 near the second box 22 is the largest, and the cross-sectional area of the accommodating cavity 212 becomes smaller and smaller in an extending direction of the second box 22. Such a structure of the first box 21 helps place the battery cell 10 into the box and the arrangement of other parts.

The second box 22 is configured to cover the open end 211 of the first box 21 to define an accommodating space with a given volume for accommodating the battery cell 10. The first box 21 and the second box 22 are sealed by using the sealing assembly 23 and are fixedly connected by using bolts and other fastening methods at an edge of the box to define a closed accommodating space to accommodate the battery cell 10. The first box 21 and the second box 22 may be of a plurality of shapes, for example, cuboid, cylinder, or the like. The second box 22 may also be a hollow structure with the opening 111 at one end, and the opening 111 of the second box 22 covers the open end 211 of the first box 21 to form a box with an accommodating space. The sealing assembly 23 serves as a seal between the first box 21 and the second box 22 to form the accommodating apparatus 20 with a hermetic space. Certainly, the first box 21 may be a hollow structure with the open end 111, and the second box 22 is a plate-shaped structure. The second box 22 covers the open end 211 of the first box 21 to form a box with an accommodating space, and the sealing assembly 23 serves as a seal between the first box 21 and the second box 22 to form the accommodating apparatus 20 with a hermetic space.

One side of the first sealing piece 231 abuts against the open end 211 of the first box 21, and one side of the second sealing piece 232 abuts against the second box 22. Projections of the first sealing piece 231 and the second sealing piece 232 in a horizontal plane along a height direction of the accommodating apparatus 20 may be fully overlapped, or partially overlapped, or arranged side by side. That is, the first sealing piece 231 and the second sealing piece 232 may be arranged through lamination or side by side in the height direction of the accommodating apparatus 20.

The first sealing piece 231 may be a sealant applied between the first box 21 and the second box 22, or may be a gasket disposed between the first box 21 and the second box 22. The second sealing piece 232 may be a sealant applied between the first box 21 and the second box 22, or may be a gasket disposed between the first box 21 and the second box 22. A material of the first sealing piece 231 and the second sealing piece 232 may be nitrile rubber, EPDM rubber, fluororubber, silica gel, fluorosilicone elastomer, nylon, polyurethane, engineering plastic, and the like.

The first box 21 and the second box 22 jointly define an accommodating space. The first box 21 and the second box 22 are sealed using the first sealing piece 231 and the second sealing piece 232 that are separate from each other, so as to implement the hermetic connection between the first box 21 and the second box 22. In this way, a hermetic accommodating space is formed between the first box 21 and the second box 22, thereby reducing the risk of leakage in the accommodating apparatus 20. The first sealing piece 231 and the second sealing piece 232 are separate from each other, so that the first sealing piece 231 and the second sealing piece 232 can be installed separately without interference. This makes the installation of the first sealing piece 231 and the second sealing piece 232 more flexible, allowing them to be installed between the first box 21 and the second box 22 in a proper manner, so as to properly utilize the space between the first box 21 and the second box 22. This is conducive to reducing outline dimensions of the accommodating apparatus 20, thereby increasing volumetric energy density of the battery 100 using such accommodating apparatus 20.

Referring to FIG. 5, FIG. 6, and FIG. 7, in some embodiments, the sealing assembly 23 further includes a bracket 233, and the bracket 233 is disposed between the open end 211 and the second box 22. The first sealing piece 231 is configured as a seal between the open end 211 and the bracket 233, and the second sealing piece 232 is configured as a seal between the bracket 233 and the second box 22.

In a process of assembling the accommodating apparatus 20, the first sealing piece 231 and the second sealing piece 232 may be fastened to the bracket 233 to form an integral sealing assembly 23. Then, the sealing assembly 23 is installed on the open end 211 of the first box 21, and a side of the sealing assembly 23 facing away from the first box 21 is covered with the second box 22 to implement sealing between the first box 21 and the second box 22 by using the sealing assembly 23.

Certainly, the first sealing piece 231 may alternatively be installed at the open end 211, and the first sealing piece 231 is pressed between the open end 211 of the first box 21 and the bracket 233 by using the bracket 233.

Then, the second sealing piece 232 is installed on a side of the bracket 233 facing away from the first box 21, and the second sealing piece 232 is pressed between the bracket 233 and the first box 21 by using the first box 21. The bracket 233 is provided between the first box 21 and the second box 22. The first sealing piece 231 serves as a seal between the bracket 233 and the open end 211 of the first box 21, and the second sealing piece 232 serves as a seal between the bracket 233 and the second box 22, facilitating installation and fastening of the first sealing piece 231 and the second sealing piece 232. In addition, the bracket 233 is provided so that the first sealing piece 231 can be installed based on a relative structure and position relationship between the bracket 233 and the first box 21, and the second sealing piece 232 can be installed based on a relative structure and position relationship between the bracket 233 and the second box 22. This makes the installation of the first sealing piece 231 and the second sealing piece 232 more flexible, allowing them to be installed between the first box 21 and the second box 22 in a more proper manner. This is conducive to reducing the outline dimensions of the accommodating apparatus 20, thereby increasing the volumetric energy density of the battery 100 using such accommodating apparatus 20.

Referring to FIG. 6 and FIG. 7, FIG. 6 is a cross-sectional view of a battery 100 provided in some embodiments of this application, and FIG. 7 is a diagram of FIG. 6 enlarged at I. In some embodiments, the bracket 233 includes a body 2331 and an extension portion 2332. The extension portion 2332 extends from the body 2331 into the first box 21 in a direction facing away from the second box 22, and the first sealing piece 231 abuts against the extension portion 2332.

The body 2331 is in a closed-loop structure, and a middle portion of the body 2331 is provided with a bypass hole 23311 opposite the opening 111 of the open end 211. In the embodiment in which the battery cell 10 is partially accommodated in the first box 21, another part of the battery cell 10 can extend out of the first box 21 through the open end 211 and the bypass hole 23311 in sequence. The body 2331 is supported at the open end 211. The body 2331 may be made of hard plastic or metal parts that meet certain hardness and stiffness requirements. An outer edge part of the body 2331 is fixedly connected to both the first box 21 and the second box 22.

The extension portion 2332 is arranged along the periphery of the opening 111 of the open end 211 of the first box 21, and the first sealing piece 231 encloses the periphery of the extension portion 2332 and abuts against the first box 21 to seal the periphery the open end 211.

The extension portion 2332 extends into the first box 21 and the first sealing piece 231 abuts against the extension portion 2332, which can be understood as that a part of or the whole of the first sealing piece 231 may be located inside the first box 21. To meet the sealing rating requirement of the accommodating apparatus 20 of the battery, the first sealing piece 231 needs to be provided with a minimum length of sealing surface. The provision of extension portion 2332 extending into the first box 21 is equivalent to that the first sealing piece 231 retracts into the first box 21, which reduces a width of a flange protruding outward of the first box 21 occupied by the first sealing piece 231 while a requirement for a certain length of sealing surface is met, thereby reducing a space of the open end 211. In this way, the outline dimensions of the accommodating apparatus 20 are reduced, thereby increasing the volumetric energy density of the battery 100 using such accommodating apparatus 20.

In some embodiments, the first sealing piece 231 includes a first sealing portion 2311 and a second sealing portion 2312. The first sealing portion 2311 is configured as a seal between the open end 211 and the body 2331, and the second sealing portion 2312 is configured as a seal between an inner side 213 of the first box and the extension portion 2332.

The first sealing portion 2311 may be a closed-loop structure and encloses the periphery of the extension portion 2332, and the first sealing portion 2311 may also be a structure that encloses the periphery of the extension portion 2332 but is not closed along the periphery of the extension portion 2332. The second sealing portion 2312 may be a sleeve structure, and the second sealing portion 2312 fits around the outer circumference of the extension portion 2332, and the second sealing portion 2312 may also be a structure that encloses the periphery of the extension portion 2332 but is not closed around the periphery of the extension portion 2332.

In this application, the first sealing portion 2311 is provided as the first sealing portion 2311 and the second sealing portion 2312 that are sealed along two different directions, which can match a structure of the bracket 233 and meet the sealing rating requirement of the minimum sealing area of the accommodating apparatus 20.

In some embodiments, the first sealing portion 2311 is integrally formed with the second sealing portion 2312. The first sealing piece 231 is an integral structure formed by injection molding, casting, and the like, which helps manufacturing of the first sealing piece 231. In addition, there is no connection relationship or gap between the first sealing portion 2311 and the second sealing portion 2312, so that sealing performance of the first sealing portion 231 is better.

In some other embodiments, the first sealing portion 2311 and the second sealing portion 2312 are provided separately.

In an embodiment in which the first sealing portion 2311 and the second sealing portion 2312 are provided separately, the first sealing portion 2311 may be connected to the second sealing portion 2312. For example, one end of the first sealing portion 2311 near the inside of the first box 21 is connected to one end of the second sealing portion 2312 near the second box 22. The first sealing portion 2311 may alternatively not be connected to the second sealing portion 2312. The first sealing portion 2311 is located outside the accommodating cavity 212 of the first box 21, and the body 2331 of the bracket 233 presses the first sealing portion 2311 against the open end 211 of the first box 21. The second sealing portion 2312 is located inside the accommodating cavity 212 of the first box 21, and the extension portion 2332 of the bracket 233 presses the second sealing portion 2312 against an inner wall of the first box 21. The first sealing portion 2311 may be in contact with the second sealing portion 2312 or there may be a gap between the first sealing portion 2311 and the second sealing portion 2312.

The first sealing portion 2311 and the second sealing portion 2312 are provided separately so that the assembly methods are more diverse, thereby helping choose a suitable assembly method according to an actual need. This makes the installation of the first sealing portion 2311 and the second sealing portion 2312 more flexible, allowing them be installed between the bracket 233 and the first box 21 in a proper way. This is conducive to reducing the outline dimensions of the accommodating apparatus 20, thereby increasing the volumetric energy density of the battery 100 using such accommodating apparatus 20.

A part of the first sealing piece 231 serves as a seal between the open end 211 of the first box 21 and the body 2331 of the bracket 233, and another part of the first sealing piece 231 serves as a seal between the inner side 213 of the first box and the extension portion 2332 of the bracket 233, that is, the first sealing piece 231 retracts into the first box 21. In this way, space occupied by the first sealing piece 231 at the open end 211 of the first box 21 is reduced, so that the outline dimensions of the whole accommodating apparatus 20 are reduced, thereby increasing the volumetric energy density of the battery 100 using such accommodating apparatus 20. In addition, sealing is implemented at both the open end 211 of the first box 21 and the inner side 213 of the first box, which can also improve the sealing performance of the accommodating apparatus 20.

In some embodiments, the second sealing portion 2312 fits around the extension portion 2332.

In an embodiment in which the second sealing portion 2312 is a sleeve, an inner peripheral surface of the second sealing portion 2312 may be connected to or abutted against an outer peripheral surface of the extension portion 2332. In an embodiment in which the second sealing portion 2312 is an unclosed structure, the outer peripheral surface of the second sealing portion 2312 may be connected to the inner side 213 of the first box to fasten the second sealing portion 2312 to the inner side 213 of the first box, or the second sealing portion 2312 may be fastened to the outer peripheral surface of the extension portion 2332.

The second sealing portion 2312 fits around the extension portion 2332. In a process of assembling the accommodating apparatus 20, after the second sealing portion 2312 and the bracket 233 are assembled into one part, the part is installed at the open end 211 of the first box 21, and then the open end 211 of the first box 21 is covered with the second box 22, making the assembly easier and faster.

Because the second sealing portion 2312 is located in the first box 21, part of the space in the first box 21 is occupied. Reducing an internal space of the first box 21 occupied by the second sealing portion 2312 can reduce an impact of the second sealing portion 2312 on the energy density of the battery 100.

In some embodiments, in a direction of the first box 21 facing away from the second box 22, an end of the second sealing portion 2312 facing away from the second box 22 does not exceed an end of the extension portion 2332 facing away from the second box 22.

In some embodiments, the end of the second sealing portion 2312 facing away from the second box 22 does not exceed the end of the extension portion 2332 facing away from the second box 22. Alternatively, in the direction of the first box 21 facing away from the second box 22, the end of the extension portion 2332 facing away from the second box 22 extends beyond the end of the second sealing portion 2312 facing away from the second box 22.

In some embodiments, the end of the second sealing portion 2312 facing away from the second box 22 does not exceed the end of the extension portion 2332 facing away from the second box 22. Alternatively, in the direction of the first box 21 facing away from the second box 22, the end of the second sealing portion 2312 facing away from the second box 22 is flush with the end of the extension portion 2332 facing away from the second box 22. This ensures a large sealing coverage and good sealing performance of the first sealing piece 231, and also reduces the risk of interference between the second sealing portion 2312 and other components in the accommodating apparatus 20.

The end of the second sealing portion 2312 facing away from the second box 22 does not exceed the end of the extension portion 2332 facing away from the second box 22, which can reduce the risk of interference between the second sealing portion 2312 and other components in the accommodating apparatus 20 while guaranteeing the sealing performance of the first sealing portion 231.

In some embodiments, the battery cell 10 is fully accommodated in the first box 21, the electrode terminal 132 extends in a direction approaching the first box 21, and the end of the extension portion 2332 of the bracket 233 facing away from the body does not exceed an outer surface of the end cover 131 (the end cover 131 faces away from a surface of the electrode assembly 12). In this way, a space corresponding to the shoulder region 133 of the battery cell 10 can be used to implement sealing for the first box 21 and the second box 22. This allows part of the first sealing piece 231 to retract into the first box 21, which can reduce the outline dimensions of the battery 100, and also reduce the space occupied by the first sealing piece 231 in the first box 21 to guarantee the energy density of the battery 100.

In some embodiments, the open end 211 is provided with a first accommodating portion 214 for accommodating the first sealing portion 2311, the first accommodating portion 214 has a bottom surface 2141 that is connected to the inner side 213 of the first box, and the first sealing portion 2311 is configured as a seal between the bottom surface 2141 and the body 2331.

The first accommodating portion 214 is a first groove provided in the open end 211 of the first box 21, the first groove runs through the open end 211 and the inner side 213 of the first box, and a bottom surface 2141 of the first groove is connected to the inner side 213 of the first box. The bottom surface 2141 of the first groove is connected to the inner side 213 of the first box by using an arc transition surface 2142 to avoid that an edge is formed at a position at which the bottom surface 2141 of the first groove and the inner side 213 of the first box are connected, thereby damaging the first sealing piece 231. The first sealing portion 2311 serves as a seal between the bottom surface 2141 of the first groove and the body 2331 of the bracket 233.

The first sealing portion 2311 may be partially or fully accommodated in the first accommodating portion 214. The first sealing portion 2311 is compressed between the open end 211 of the first box 21 and the body 2331 of the bracket 233 to have a better sealing performance. In some embodiments, before the first sealing portion 2311 is compressed, the first sealing portion 2311 is partially accommodated in the first accommodating portion 214. After the first sealing portion 2311 is compressed, the first sealing portion 2311 is fully accommodated in the first accommodating portion 214. In this case, a depth of the first accommodating portion 214 defines the maximum compression amount of the first sealing portion 2311 to create a stable hermetic relationship between the first box 21 and the second box 22 and improve the sealing performance. In other embodiments, before the first sealing portion 2311 is compressed, the first sealing portion 2311 is partially accommodated in the first accommodating portion 214, and after the first sealing portion 2311 is compressed, the first sealing portion 2311 is partially accommodated in the first accommodating portion 214.

The first sealing portion 2311 may be partially or fully accommodated in the first accommodating portion 214. Therefore, provision of the first accommodating portion 214 can not only reduce the size of the accommodating apparatus 20 in a height direction, but also define the maximum compression amount of the first sealing portion 2311, achieving good sealing performance between the first box 21 and the second box 22.

In some embodiments, a side of the bracket 233 facing the second box 22 is provided with a second accommodating portion 2333 for accommodating the second sealing piece 232.

The second accommodating portion 2333 is a second groove provided on a surface of the bracket 233 facing the second box 22, and the second groove runs through the surface of the body 2331 facing the second box 22. In some embodiments, the second groove may also run through an inner side 23312 of the body. FIG. 7 shows a second groove that does not run through an inner side 23312 of the body.

The second sealing piece 232 may be partially or fully accommodated in the second accommodating portion 2333. The second sealing piece 232 is compressed between the second box 22 and the body 2331 of the bracket 233 to have better sealing performance. In some embodiments, before the second sealing piece 232 is compressed, the second sealing piece 232 is partially accommodated in the second accommodating portion 2333. After the second sealing piece 232 is compressed, the second sealing piece 232 is fully accommodated in the second accommodating portion 2333. In this case, a depth of the second accommodating portion 2333 defines the maximum compression amount of the second sealing piece 232 to form a stable hermetic relationship between the first box 21 and the second box 22 and improve the sealing performance. In some other embodiments, before the second sealing piece 232 is compressed, the second sealing piece 232 is partially accommodated in the second accommodating portion 2333, and after the second sealing piece 232 is compressed, the second sealing piece 232 is partially accommodated in the second accommodating portion 2333.

The second sealing piece 232 may be partially or fully accommodated in the second accommodating portion 2333. Therefore, provision of the second accommodating portion 2333 can not only reduce the size of the accommodating apparatus 20 in the height direction, but also define the maximum compression amount of the second sealing portion 2312, achieving good sealing performance between the first box 21 and the second box 22.

In some embodiments, the accommodating apparatus 20 further includes a fastening piece 24, and the fastening piece 24 is configured to lock the first box 21, the second box 22, and the bracket 233.

The fastening piece 24 may be a screw, a bolt, and the like. The first box 21 includes a first box body 215 and a first connecting portion 216. The first connecting portion 216 is arranged along an edge of the first box body 215, and the first connecting portion 216 is provided with a first locking hole (not shown in the figure). The first locking hole is provided in plurality, and the plurality of first locking holes are spaced apart along the periphery of the opening 111 of the open end 211.

The second box 22 includes a second box body 221 and a second connecting portion 222. The second connecting portion 222 is arranged along an edge of the second box body 221, and the second connecting portion 222 is provided with a second locking hole (not shown in the figure). The first box 21, the second box 22, and the bracket 233 are locked using the fastening piece 24, so that there is a stable relative position relationship between the first box 21, the second box 22, and the bracket 233. In this way, the first sealing piece 231 stably serves as a seal between the first box 21 and the bracket 233, and the second sealing piece 232 stably serves as a seal between the second box 22 and the bracket 233, thereby ensuring the sealing performance of the accommodating apparatus 20. The second locking hole is provided in plurality, and the plurality of second locking holes are spaced apart along the periphery of the opening 111 of the open end 211.

The body 2331 is provided with a third locking hole 2334 (shown in FIG. 5), and the third locking hole is provided in plurality. The plurality of the third locking holes 2334 are spaced apart in the body 2331 around the circumference of the bypass hole 23311. The first locking hole and the second locking hole are provided in one-to-one correspondence, and the second locking hole and the third locking hole are provided in one-to-one correspondence.

The fastening piece 24 passes through the first locking hole, the third locking hole 2334, and the second locking hole in sequence to lock the first box 21, the bracket 233, and the second box 22. After the first box 21, the bracket 233, and the second box 22 are locked, the first sealing portion 2311 is pressed between the body 2331 and the open end 211, the second sealing portion 2312 is pressed between the extension portion 2332 and the inner side 213 of the first box, and the second sealing piece 232 is pressed between the body 2331 and the second box 22.

In other embodiments, the bracket 233 is disposed between the first box 21 and the second box 22, and the fastening piece 24 is configured to fasten the first box 21 and the second box 22 to clamp and fix the bracket 233 between the first box 21 and the second box 22. In such embodiment, the fastening piece 24 is disposed on an outer peripheral side of the body 2331 of the bracket 233.

The first box 21, the second box 22, and the bracket 233 are locked using the fastening piece 24, so that there is a stable relative position relationship between the first box 21, the second box 22, and the bracket 233. In this way, the first sealing piece 231 stably serves as a seal between the first box 21 and the bracket 233, and the second sealing piece 232 stably serves as a seal between the second box 22 and the bracket 233, thereby ensuring the sealing performance of the accommodating apparatus 20.

In some embodiments, the fastening piece 24 is disposed on an outer peripheral side of the first sealing piece 231. In other embodiments, the fastening piece 24 may pass through the first box 21, the first sealing piece 231, the body 2331, and the second box 22 in sequence to lock the first box 21, the first sealing piece 231, the body 2331, and the second box 22.

The fastening piece 24 is disposed on the outer peripheral side of the first sealing piece 231, which avoids the position of the first sealing piece 231 and enhances the sealing performance.

In some embodiments, a sealing width of the first sealing portion 2311 is smaller than or equal to a sealing width of the second sealing portion 2312.

The sealing width of the first sealing piece 231 is a width dimension of the sealing interface between the first sealing piece 231 and a to-be-sealed component. In this application, the sealing width of the first sealing piece 231 is also a sum of a sealing width of the first sealing portion 2311 and a sealing width of the second sealing portion 2312. Referring to FIG. 7, for example, the sealing width of the first sealing piece 231 is a width of a sealing contact surface between the first sealing piece 231 and the first box 21. Because the first sealing portion 2311 and the second sealing portion 2312 extend in different directions, and there is a certain length of sealing transition section between the first sealing portion 2311 and the second sealing portion 2312. Therefore, the sealing width of the first sealing piece 231 is also a sum of a contact width between the first sealing portion 2311 and the first box 21, a contact width between the second sealing portion 2312 and the first box 21, and a contact width between a round transition section between the first sealing portion 2311 and the second sealing portion 2312 and the first box 21.

When it is necessary to meet the sealing rating requirement of the accommodating apparatus 20, a sealing interface between the first sealing piece 231 and the first box 21 needs to meet a requirement for minimum sealing width. In the embodiments of this application, the first sealing piece 231 is bent so that the sealing width of the sealing piece that extends only in any one direction can be reduced when the requirement for the minimum sealing width is met. When the sealing width of the first sealing portion 2311 is smaller than or equal to the sealing width of the second sealing portion 2312, an excess space at the edge or corner in the accommodating apparatus 20 can be used as a sealing interface of the second sealing portion 2312, which can balance the sealing performance to a maximum extent and reduce a flange width at the edges of the first box 21 and the second box 22 to reduce the overall size of the accommodating apparatus 20, thereby improving the energy density.

An embodiment of this application provides a battery 100 including a battery cell 10 and the accommodating apparatus 20 provided in any one of the foregoing embodiments. The battery cell 10 is accommodated in the accommodating apparatus 20.

Referring to FIG. 7, the accommodating apparatus 20 includes a first box 21, a second box 22, a sealing assembly 23, and a fastening piece 24. The first box 21 has an open end 211, and the battery cell 10 is fully accommodated in the first box 21.

The sealing assembly 23 includes a first sealing piece 231, a second sealing piece 232, and a bracket 233. The first sealing piece 231 includes a first sealing portion 2311 and a second sealing portion 2312 that are integrally formed. The bracket 233 includes a body 2331 and an extension portion 2332, and the extension portion 2332 is connected to the body 2331 and extends from the body 2331 into the first box 21. The first sealing portion 2311 is accommodated in a first accommodating portion 214 of the open end 211 and sealed between a bottom surface 2141 of the first accommodating portion 214 and the body 2331. The second sealing portion 2312 fits around the periphery of the extension portion 2332 and serves as a seal between the extension portion 2332 and the inner side 213 of the first box. The second sealing piece 232 is accommodated in the second accommodating portion 2333 of the bracket 233. The second box 22 covers a side of the body 2331 facing away from the first box 21. The first box 21, the bracket 233, and the second box 22 are locked using the fastening piece 24.

During installation, the first sealing piece 231 and the second sealing piece 232 are first installed on the bracket 233 so that the first sealing piece 231, the second sealing piece 232, and the bracket 233 form the integral sealing assembly 23, and the integral sealing assembly 23 is installed at the open end 211. Then, a side of the bracket 233 facing away from the first box 21 is covered with the second box 22, and the first box 21, the bracket 233, and the second box 22 are locked using the fastening piece 24.

A combination sealing assembly 23 can be installed between the first box 21 and the second box 22 in a proper manner, so as to properly utilize the space between the first box 21 and the second box 22. This is conducive to reducing outline dimensions of the accommodating apparatus 20, thereby increasing the volumetric energy density of the battery 100.

An embodiment of this application further provides an electric device including the battery 100 according to the foregoing embodiments.

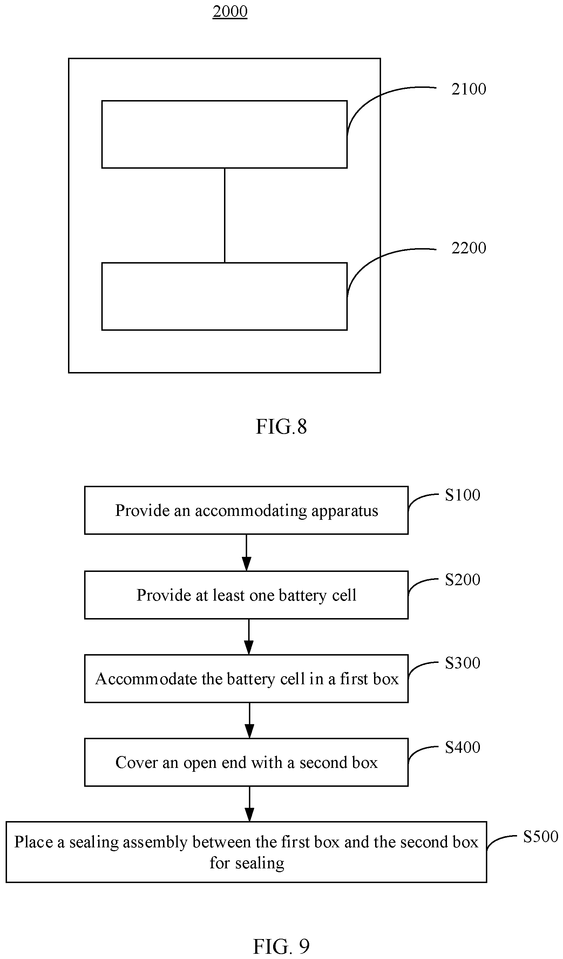

FIG. 8 is a schematic structural diagram of a manufacturing device 2000 of battery according to some embodiments of this application. The manufacturing device 2000 of battery includes a providing apparatus 2100 and an assembly apparatus 2200. The providing apparatus 2100 is configured to provide an accommodating apparatus 20 and at least one battery cell 10, and the accommodating apparatus 20 includes a first box 21, a second box 22, and a sealing assembly 23. The first box 21 has an open end 211. The sealing assembly 23 includes a first sealing piece 231 and a second sealing piece 232. The assembly apparatus 2200 is configured to accommodate the battery cell 10 in the first box 21, cover the open end 211 with the second box 22, and place the sealing assembly 23 between the first box 21 and the second box 22 so that the first sealing piece 231 serves as a seal between the open end 211 and the second box 22 and the second sealing piece 232 serves as a seal between the first sealing piece 231 and the second box 22.

FIG. 9 is a flowchart of a manufacturing method of a battery 100 provided in some embodiments of this application. The manufacturing method of the battery 100 includes the following steps.

Step S100: Provide an accommodating apparatus 20, where the accommodating apparatus 20 includes:
a first box 21 having an open end 211;
a second box 22; and
a sealing assembly 23, including a first sealing piece 231 and a second sealing piece 232.

Step S200: Provide at least one battery cell 10.

Step S300: Accommodate the battery cell 10 in the first box 21.

Step S400: Cover the open end 211 with the second box 22.

Step S500: Place the sealing assembly 23 between the first box 21 and the second box 22 so that the first sealing piece 231 serves as a seal between the open end 211 and the second box 22 and the second sealing piece 232 serves as a seal between the first sealing piece 231 and the second box 22.

During installation, the first sealing piece 231 and the second sealing piece 232 are first installed on the bracket 233 so that the first sealing piece 231, the second sealing piece 232, and the bracket 233 form the integral sealing assembly 23, and the integral sealing assembly 23 is installed at the open end 211. Then, the second box 22 covers a side of the bracket 233 facing away from the first box 21, and the first box 21, the bracket 233, and the second box 22 are then locked using the fastening piece 24 so that the first sealing piece 231 serves as a seal between the open end 211 and the second box 22, and the second sealing piece 232 serves as a seal between the first sealing piece 231 and the second box 22.

In some embodiments, the manufacturing method of the battery 100 further includes that: the first sealing piece 231 implements sealing by glue coating and/or the second sealing piece 232 implements sealing as a formed gasket.

In other embodiments, the first sealing piece 231 may implement sealing by using a formed gasket, and the second sealing piece 232 may implement sealing by glue coating.

The first sealing piece 231 implements sealing using the glue coating so that the first sealing piece 231 not only has a sealing function but also has an adhesive capability, facilitating a stable sealing between the first box 21 and the second box 22. The second sealing piece 232 implements sealing using the formed gasket, which is easy to operate.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. An accommodating apparatus, comprising:
a first box having an open end;
a second box, configured to cover the open end; and
a sealing assembly, comprising a first sealing piece and a second sealing piece that are separate from each other, wherein the first sealing piece and the second sealing piece are configured to abut against the open end and the second box respectively, to implement a hermetic connection between the first box and the second box.

2. The accommodating apparatus according to claim 1, wherein the sealing assembly further comprises:
a bracket, disposed between the open end and the second box;
wherein the first sealing piece is configured as a seal between the open end and the bracket, and the second sealing piece is configured as a seal between the bracket and the second box.

3. The accommodating apparatus according to claim 2, wherein the bracket comprises a body and an extension portion, the extension portion extends from the body into the first box in a direction facing away from the second box, and the first sealing piece abuts against the extension portion.

4. The accommodating apparatus according to claim 3, wherein the first sealing piece comprises a first sealing portion and a second sealing portion, the first sealing portion is configured as a seal between the open end and the body, and the second sealing portion is configured as a seal between an inner side of the first box and the extension portion.

5. The accommodating apparatus according to claim 4, wherein the first sealing portion is integrally formed with the second sealing portion.

6. The accommodating apparatus according to claim 4, wherein the first sealing portion and the second sealing portion are provided separately.

7. The accommodating apparatus according to claim 5 or 6, wherein the second sealing portion fits around the extension portion.

8. The accommodating apparatus according to any one of claims 4 to 7, wherein in a direction of the first box facing away from the second box, an end of the second sealing portion facing away from the second box does not exceed an end of the extension portion facing away from the second box.

9. The accommodating apparatus according to claim 8, wherein in the direction of the first box facing away from the second box, the end of the second sealing portion facing away from the second box is flush with the end of the extension portion facing away from the second box.

10. The accommodating apparatus according to any one of claims 4 to 9, wherein the open end is provided with a first accommodating portion for accommodating the first sealing portion, the first accommodating portion has a bottom surface connects to the inner side, and the first sealing portion is configured as a seal between the bottom surface and the body.

11. The accommodating apparatus according to any one of claims 2 to 10, wherein a side of the bracket facing the second box is provided with a second accommodating portion for accommodating the second sealing piece.

12. The accommodating apparatus according to any one of claims 2 to 11, wherein the accommodating apparatus further comprises a fastening piece, and the fastening piece is configured to lock the first box, the second box, and the bracket.

13. The accommodating apparatus according to claim 12, wherein the fastening piece is outward from an outer periphery of the first sealing piece.

14. The accommodating apparatus according to any one of claims 4 to 10, wherein sealing width of the first sealing portion is smaller than or equal to sealing width of the second sealing portion.

15. A battery, comprising:
a battery cell; and
the accommodating apparatus according to any one of claims 1 to 14, wherein the battery cell is accommodated in the accommodating apparatus.

16. An electric device, comprising the battery according to claim 15.

17. A manufacturing device of battery, comprising:
a providing apparatus, configured to provide an accommodating apparatus and at least one battery cell, wherein the accommodating apparatus comprises:
a first box having an open end;
a second box;
a sealing assembly, comprising a first sealing piece and a second sealing piece; and
an assembly apparatus, configured to accommodate the battery cell in the first box, cover the open end with the second box, and place the sealing assembly between the first box and the second box for sealing, so that the first sealing piece serves as a seal between the open end and the second box and the second sealing piece serves as a seal between the first sealing piece and the second box.

18. A manufacturing method of battery, comprising:
providing an accommodating apparatus, wherein the accommodating apparatus comprises:
a first box having an open end;
a second box; and
a sealing assembly, comprising a first sealing piece and a second sealing piece;
providing at least one battery cell;
accommodating the battery cell in the first box;
covering the open end with the second box; and
placing the sealing assembly as a seal between the first box and the second box, so that the first sealing piece serves as a seal between the open end and the second box and the second sealing box serves as a seal between the first sealing piece and the second box.

19. The manufacturing method according to claim 18, wherein the first sealing piece implements sealing by glue coating and/or the second sealing piece implements sealing as a formed gasket.
